(19) Europäisches Patentamt European Patent Office Office européen des brevets

(11) **EP 4 524 623 A1**

(12) **EUROPEAN PATENT APPLICATION**
published in accordance with Art. 153(4) EPC

(43) Date of publication:
**19.03.2025 Bulletin 2025/12**

(21) Application number: **23803360.9**

(22) Date of filing: **19.04.2023**

(51) International Patent Classification (IPC):
*G02B 5/02* (2006.01)    *B32B 7/023* (2019.01)
*B32B 27/18* (2006.01)    *C09D 4/00* (2006.01)
*C09D 7/61* (2018.01)    *C09D 201/00* (2006.01)
*G02F 1/1335* (2006.01)

(52) Cooperative Patent Classification (CPC):
B32B 7/023; B32B 27/18; C09D 4/00; C09D 7/61;
C09D 201/00; G02B 5/02; G02F 1/1335

(86) International application number:
**PCT/JP2023/015531**

(87) International publication number:
**WO 2023/218878 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022 JP 2022078845**

(71) Applicant: **Dai Nippon Printing Co., Ltd.**
**Tokyo 162-8001 (JP)**

(72) Inventors:
• **KATSUMATA, Aya**
**Tokyo 162-8001 (JP)**

• **TADAKI, Takanobu**
**Tokyo 162-8001 (JP)**
• **OGAWA, Tomohiro**
**Tokyo 162-8001 (JP)**
• **KUZUHARA, Mitsuhiro**
**Tokyo 162-8001 (JP)**
• **UCHIYA, Naoyuki**
**Tokyo 162-8001 (JP)**
• **FURUI, Gen**
**Tokyo 162-8001 (JP)**

(74) Representative: **Cabinet Beau de Loménie**
**158, rue de l'Université**
**75340 Paris Cedex 07 (FR)**

(54) **ANTIVIRAL OPTICAL FILM, IMAGE DISPLAY PANEL, AND IMAGE DISPLAY DEVICE**

(57) Provided is an optical film which can have favorable antiviral properties while suppressing deterioration of visibility. An antiviral optical film, including a resin layer containing a binder resin and an antiviral agent on at least one surface, wherein a surface of the resin layer has a developed interfacial area ratio Sdr specified in ISO 25178-2:2012 of $1.0 \times 10^{-5}$ or more and $1.5 \times 10^{-1}$ or less.

[Fig. 1]

EP 4 524 623 A1

## Description

Technical Field

The present disclosure relates to an antiviral optical film, an image display panel, and an image display device.

Background Art

In image display devices such as televisions, laptop computers, monitors for desktop computers, and smartphones, an optical film may adhere to their surfaces to prevent scratching.

Among the image display devices, an image display device having a touch-panel function provides much opportunity to touch a surface of the image display device with a finger. If the optical film has insufficient antibacterial properties, bacteria may cause adverse effects on a human body. Thus, an optical film with imparted antibacterial properties as in Patent Literature 1 is proposed.

Citation List

Patent Literature

PTL 1: WO2015/098817

Summary of Invention

Technical Problem

With spread of infection of the novel coronavirus in recent years, the optical film is required to have not only the antibacterial properties but also antiviral properties. The optical film in Patent Literature 1 has sufficient antibacterial properties but frequently causes cases with insufficient antiviral properties.

Typically, the amount of an antiviral agent for imparting antiviral properties is larger than the amount of an antibacterial agent for imparting antibacterial properties. Accordingly, it is considered that increase in the content of the antibacterial agent in the optical film in Patent Literature 1 can impart the antiviral properties. However, the increase in the content of the antibacterial agent deteriorates visibility of the image display device.

An object of the present disclosure is to provide an optical film, an image display panel, and an image display device that can have favorable antiviral properties while suppressing deterioration of visibility.

Solution to Problem

The present disclosure provides an optical film and an image display panel according to [1] to [9], and an image display device below.

[1] An antiviral optical film, comprising a resin layer containing a binder resin and an antiviral agent on at least one surface,
wherein a surface of the resin layer has a developed interfacial area ratio Sdr specified in ISO 25178-2:2012 of $1.0 \times 10^{-5}$ or more and $1.5 \times 10^{-1}$ or less.

[2] The antiviral optical film according to [1], wherein a content of the antiviral agent is 1.0 part by mass or more and 15.0 parts by mass or less relative to 100 parts by mass of the binder resin.

[3] The antiviral optical film according to [1] or [2], wherein the antiviral agent is an inorganic antiviral agent.

[4] The antiviral optical film according to any one of [1] to [3], wherein the binder resin contains a cured product of an ionizing radiation-curable resin composition.

[5] The antiviral optical film according to any one of [1] to [4], wherein the resin layer further contains a matting agent.

[6] The antiviral optical film according to any one of [1] to [5], wherein the optical film comprises a substrate and the resin layer formed on one surface of the substrate.

[7] The antiviral optical film according to any one of [1] to [6], having a total light transmittance specified in JIS K7361-1:1997 of 85.0% or more.

[8] The antiviral optical film according to any one of [1] to [7], having a haze specified in JIS K7136:2000 of 80.0% or less.

[9] An image display panel, comprising: a display element; and the antiviral optical film according to any one of [1] to [8] disposed on the display element,

wherein the antiviral optical film is disposed on the topmost surface of the image display panel, and is disposed such that a surface on a side of the resin layer of the antiviral optical film faces a side opposite to the display element.
[10] An image display device, comprising the image display panel according to [9].

Advantageous Effects of Invention

The optical film, the image display panel, and the image display device of the present disclosure can have favorable antiviral properties while suppressing deterioration of visibility.

Brief Description of Drawings

[Fig. 1] Fig. 1 is a cross-sectional schematic view illustrating one embodiment of an optical film according to the present disclosure.
[Fig. 2] Fig. 2 is a cross-sectional view illustrating one embodiment of an image display device according to the present disclosure.

Description of Embodiments

Hereinafter, embodiments according to the present disclosure will be described.

[Antiviral optical film]

The antiviral optical film of the present disclosure includes a resin layer containing a binder resin and an antiviral agent on at least one surface, wherein a surface of the resin layer has a developed interfacial area ratio Sdr specified in ISO 25178-2:2012 of $1.0 \times 10^{-5}$ or more and $1.5 \times 10^{-1}$ or less.

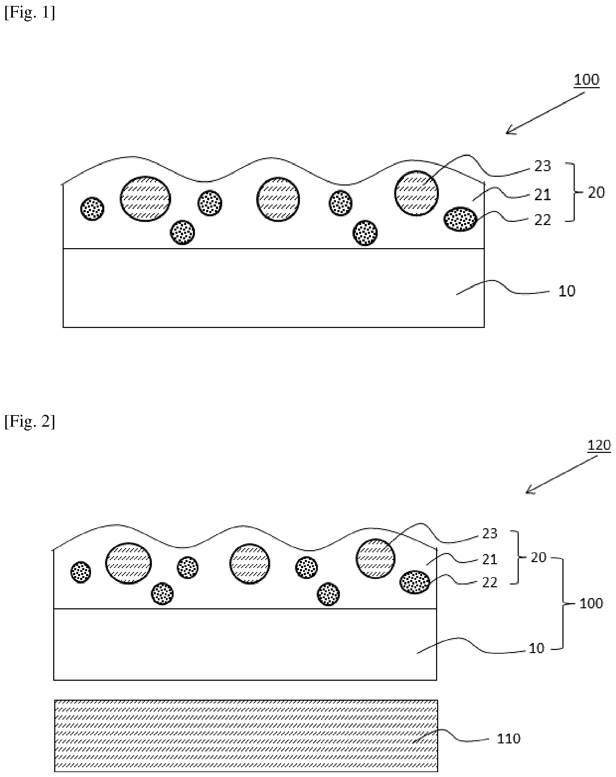

Fig. 1 is a cross-sectional schematic view of a cross-sectional profile of an optical film 100 according to the present disclosure.
The optical film 100 shown in Fig. 1 includes a resin layer containing a binder resin 21 and an antiviral agent 22 on at least one surface. The optical film 100 in Fig. 1 includes the resin layer 20 on a substrate 10, and a surface of the resin layer 20 is one surface of the optical film 100. The resin layer 20 in Fig. 1 further contains a matting agent 22.
Fig. 1 is a schematic sectional view. In other words, scales of the layers constituting the optical film 100 and scales of the surface profiles are schematic for easy illustrations, and are different from actual scales. The same is applied to Fig. 2.
The optical film according to the present disclosure is not limited to the bilayer laminate configuration in Fig. 1. For example, the resin layer of the optical film may have a monolayer configuration, or a laminate configuration with three or more layers having a layer other than the substrate and the resin layer.
A preferred embodiment of the optical film includes a resin layer on one surface of the substrate, and the surface of the resin layer corresponds to the surface of the optical film.

<Resin layer>

The optical film of the present disclosure includes the resin layer containing the binder resin and the antiviral agent on at least one surface.
When the optical film has a monolayer configuration of the resin layer, the optical film has the resin layer on both the surfaces. When the optical film has a configuration having the resin layer on the substrate, the resin layer is disposed on the surface of the optical film.

<<Surface profile>>

The surface of the resin layer needs to have a developed interfacial area ratio Sdr specified in ISO 25178-2:2012 of $1.0 \times 10^{-5}$ or more and $1.5 \times 10^{-1}$ or less.
The Sdr can be expressed by the following expression where the surface area of the resin layer surface is defined as A1 and the area of the resin layer surface when projected onto an XY plane is defined as A0. A larger Sdr can be said to indicate a large surface area of the resin layer.

$$Sdr = (A1/A0) - 1$$

When the Sdr is less than $1.0 \times 10^{-5}$, possibility of viruses to contact with the antiviral agent cannot be increased, and thus the favorable antiviral properties cannot be obtained. Note that, even if the Sdr is less than $1.0 \times 10^{-5}$, excessively adding the antiviral agent is considered to provide the favorable antiviral properties. However, excessively adding the antiviral agent tends to decrease visibility.

When the Sdr is more than $1.5 \times 10^{-1}$, deterioration of visibility of the image display device cannot be suppressed. As noted above, it can be said that a larger Sdr indicates a larger surface area of the resin layer. In other words, it can be said that a larger Sdr indicates that the resin layer has a surface profile where depressions and projections are densely disposed and/or a shape where depressions and projections have large tilt angles. For this reason, when the Sdr is more than $1.5 \times 10^{-1}$, deterioration of resolution and decrease in transmittance tend to deteriorate visibility of the image display device.

The lower limit of the Sdr is preferably $2.0 \times 10^{-5}$ or more, more preferably $4.0 \times 10^{-5}$ or more, and still more preferably $5.0 \times 10^{-5}$ or more. The upper limit of the Sdr is preferably $1.3 \times 10^{-1}$ or less, more preferably $6.0 \times 10^{-2}$ or less, and still more preferably $5.0 \times 10^{-3}$ or less.

In a constituent element described in this specification, when a plurality of options of an upper limit of a value and a plurality of options of a lower limit of a value are described, one selected from the options of the upper limit and one selected from the options of the lower limit can be combined to form an embodiment with a numerical range.

As the Sdr, examples thereof include embodiments with a numerical range such as $1.0 \times 10^{-5}$ or more and $1.5 \times 10^{-1}$ or less, $1.0 \times 10^{-5}$ or more and $1.3 \times 10^{-1}$ or less, $1.0 \times 10^{-5}$ or more and $6.0 \times 10^{-2}$ or less, $1.0 \times 10^{-5}$ or more and $5.0 \times 10^{-3}$ or less, $2.0 \times 10^{-5}$ or more and $1.5 \times 10^{-1}$ or less, $2.0 \times 10^{-5}$ or more and $1.3 \times 10^{-1}$ or less, $2.0 \times 10^{-5}$ or more and $6.0 \times 10^{-2}$ or less, $2.0 \times 10^{-5}$ or more and $5.0 \times 10^{-3}$ or less, $4.0 \times 10^{-5}$ or more and $1.5 \times 10^{-1}$ or less, $4.0 \times 10^{-5}$ or more and $1.3 \times 10^{-1}$ or less, $4.0 \times 10^{-5}$ or more and $6.0 \times 10^{-2}$ or less, and $4.0 \times 10^{-5}$ or more and $5.0 \times 10^{-3}$ or less.

The Sdr, and the Sa, Sal, and Spc described later are measured using a contactless surface profile measurement device such as a confocal laser microscope and an interferential microscope. Examples of the confocal laser microscope include "VK-X" series available from Keyence Corporation. The Sdr, Sa, Sal, Spc can be simply calculated using "Multi-file analysis application" of "VK-X" series described above.

When the Sdr, Sa, Sal, and Spc are measured using the "VK-X" series described above, the measurement is performed according to the conditions described in Examples. For example, F-operation is plane tilt correction (region specified). The region to be measured has a side of 50 μm or more and 200 μm or less, and the measurement points per side are 500 points or more and 2000 points or less.

In this specification, unless otherwise specified, the surface profiles (Sdr, Sa, Sal, Spc), and the optical physical properties (such as haze, and total light transmittance) each indicate the average of the measured values at 16 points.

In this specification, for the 16 measured points, a region of 1 cm from the outer edge is removed as a margin from the sample to be measured, and the remaining region is divided equally into 5 in the longitudinal direction and the traverse direction. At this time, 16 points of intersection are used as measurement centers. For example, when the sample to be measured is a rectangle, regions of 0.5 cm from the outer edges of the rectangle are removed as margins, and the remaining region is equally divided into 5 in the longitudinal direction and the traverse direction, and is measured where 16 points of intersection with the dotted lines are used as centers. Then, using the average, the parameter is calculated. When the sample to be measured has a shape other than a rectangular shape such as a circular shape, an oval shape, a triangular shape, or a pentagonal shape, the inscribed rectangle of each shape is drawn, and 16 points of the rectangle are measured by the above-mentioned method.

In this specification, unless otherwise specified, the surface profiles (Sdr, Sa, Sal, Spc), optical physical properties (such as haze, and total light transmittance) are measured at a temperature of $23 \pm 5°C$ and a relative humidity of 40% or more and 65% or less. Before each of the measurements thereof is started, the target sample is exposed to the atmosphere for 30 minutes or more and 60 minutes or less to perform the measurement.

The arithmetic mean height Sa of the surface of the resin layer specified in ISO 25178-2:2012 is preferably 0.04 μm or more and 0.70 μm or less.

By controlling the Sa to 0.04 μm or more, more favorable antiviral properties can be readily obtained. By controlling the Sa to 0.70 μm or less, deterioration of visibility can be more readily suppressed.

The lower limit of the Sa is more preferably 0.05 μm or more, more preferably 0.06 μm or more, more preferably 0.07 μm or more. The upper limit of the Sa is more preferably 0.60 μm or less, more preferably 0.40 μm or less, more preferably 0.25 μm or less.

Examples of an embodiment of a preferable range of the Sa include 0.04 μm or more and 0.70 μm or less, 0.04 μm or more and 0.60 μm or less, 0.04 μm or more and 0.40 μm or less, 0.04 μm or more and 0.25 μm or less, 0.05 μm or more and 0.70 μm or less, 0.05 μm or more and 0.60 μm or less, 0.05 μm or more and 0.40 μm or less, 0.05 μm or more and 0.25 μm or less, 0.06 μm or more and 0.70 μm or less, 0.06 μm or more and 0.60 μm or less, 0.06 μm or more and 0.40 μm or less, 0.06 μm or more and 0.25 μm or less, 0.07 μm or more and 0.70 μm or less, 0.07 μm or more and 0.60 μm or less,

0.07 μm or more and 0.40 μm or less, and 0.07 μm or more and 0.25 μm or less.

The minimum autocorrelation length Sal of the surface of the resin layer specified in ISO 25178-2:2012 is preferably 9.8 μm or more and 14.0 μm or less.

The Sal is a parameter where the traverse direction is focused. A smaller Sal indicates that the surface of the resin layer has denser depressions and projections, and a larger Sal indicates that the surface of the resin layer has depressions and projections with wider intervals. The value of the "mean length of the roughness profile elements RSm" specified in JIS B0601 is hardly affected by fine depressions and projections, and is affected only by large depressions and projections. In contrast, unlike the RSm, the value of Sal is affected not only by large depressions and projections but also by fine depressions and projections. Moreover, in spite of wider intervals between depressions and projections, the Sal tends to reduce if protrusions are small or depressions and projections forms a complex profile. Moreover, the Sal tends to increase if protrusions have a monotonous profile.

By controlling the Sal to 9.8 μm or more, deterioration of visibility can be more readily suppressed. By controlling the Sal to 14.0 μm or less, more favorable antiviral properties can be readily obtained.

The lower limit of the Sal is more preferably 10.0 μm or more, more preferably 10.2 μm or more, more preferably 10.5 μm or more. The upper limit of the Sal is more preferably 13.0 μm or less, more preferably 12.5 μm or less, more preferably 12.0 μm or less.

Examples of an embodiment of a preferable range of the Sal include 9.8 μm or more and 14.0 μm or less, 9.8 μm or more and 13.0 μm or less, 9.8 μm or more and 12.5 μm or less, 9.8 μm or more and 12.0 μm or less, 10.0 μm or more and 14.0 μm or less, 10.0 μm or more and 13.0 μm or less, 10.0 μm or more and 12.5 μm or less, 10.0 μm or more and 12.0 μm or less, 10.2 μm or more and 14.0 μm or less, 10.2 μm or more and 13.0 μm or less, 10.2 μm or more and 12.5 μm or less, 10.2 μm or more and 12.0 μm or less, 10.5 μm or more and 14.0 μm or less, 10.5 μm or more and 13.0 μm or less, 10.5 μm or more and 12.5 μm or less, and 10.5 μm or more and 12.0 μm or less.

The arithmetic mean peak curvature Spc of the surface of the resin layer specified in ISO 25178-2:2012 is preferably 400 [1/mm] or more and 950 [1/mm] or less.

The Spc is a parameter that indicates an arithmetic mean of major peak curvatures in a measurement region. A smaller Spc means that the peaks on the surface of the resin layer have a large curvature and are rounded. A larger Spc means that the peaks on the surface of the resin layer have a small curvature and are sharp.

By controlling the Spc to 400 [1/mm] or more, deterioration of visibility can be more readily suppressed. By controlling the Spc to 950 [1/mm] or less, more favorable antiviral properties can be readily obtained.

The lower limit of the Spc is more preferably 410 [1/mm] or more, more preferably 415 [1/mm] or more, more preferably 420 [1/mm] or more. The upper limit of the Spc is more preferably 900 [1/mm] or less, more preferably 800 [1/mm] or less, more preferably 700 [1/mm] or less.

Examples of an embodiment of a preferable range of the Spc include 400 [1/mm] or more and 950 [1/mm] or less, 400 [1/mm] or more and 900 [1/mm] or less, 400 [1/mm] or more and 800 [1/mm] or less, 400 [1/mm] or more and 700 [1/mm] or less, 410 [1/mm] or more and 950 [1/mm] or less, 410 [1/mm] or more and 900 [1/mm] or less, 410 [1/mm] or more and 800 [1/mm] or less, 410 [1/mm] or more and 700 [1/mm] or less, 415 [1/mm] or more and 950 [1/mm] or less, 415 [1/mm] or more and 900 [1/mm] or less, 415 [1/mm] or more and 800 [1/mm] or less, 415 [1/mm] or more and 700 [1/mm] or less, 420 [1/mm] or more and 950 [1/mm] or less, 420 [1/mm] or more and 900 [1/mm] or less, 420 [1/mm] or more and 800 [1/mm] or less, and 420 [1/mm] or more and 700 [1/mm] or less.

< <Method for forming resin layer>>

The above-mentioned resin layer having the surface profile can be formed, for example, by (A) shaping using an emboss roll, (B) an etching treatment, (C) molding using a mold, and (D) forming a coating by application. Among these methods, (C) molding using a mold is suitable to readily obtain a stable profile of the surface, and (D) forming a coating by application is suitable for productivity and support for a variety of kinds of products.

In the method (C), for example, the resin layer can be formed by casting a composition for the resin layer including the binder resin and the antiviral agent into a mold, and removing the molded composition from the mold. The mold to be used is a mold having the inverted surface profile with respect to that of the resin layer. Such a mold can be prepared, for example, by a method (c1-1) to (c1-2) or by a method (c2) below.

(c1-1) A profile where Sdr or the like falls within predetermined ranges is created by simulation. Further, the simulated profile is inverted.

(c1-2) A metal is carved by laser light to reflect the inverted profile, thereby obtaining a mold.

(c2) A mold having the inverted profile with respect to that of the resin layer prepared by (D) is obtained by an electroforming method widely used.

When the resin layer is formed by (D), examples of the method include a method (d1) below.

(d1) A method of applying a resin layer coating solution containing a binder resin, an antiviral agent, and a matting agent, followed by drying to form a resin layer having depressions and projections mainly based on the matting agent.

<<Binder resin>>

To readily obtain more favorable scratch resistance, the binder resin preferably contains a cured product of a curable resin composition, such as a cured product of a thermosetting resin composition or a cured product of an ionizing radiation curable-resin composition, and more preferably contains a cured product of an ionizing radiation curable-resin composition.

The binder resin may contain a thermoplastic resin in the range not inhibiting the effects of the present disclosure.

The proportion of the cured product of the curable resin composition is preferably 80% by mass or more, more preferably 90% by mass or more, still more preferably 100% by mass relative to the total amount of the binder resin.

The thermosetting resin composition is a composition containing at least a thermosetting resin, and is a resin composition curable by heating.

Examples of thermosetting resins include acrylic resins, urethane resins, phenol resins, urea melamine resins, epoxy resins, unsaturated polyester resins, and silicone resins. In thermosetting resin composition, a curing agent is added to these curable resins as needed.

The ionizing radiation curable-resin composition is a composition containing a compound having an ionizing radiation-curable functional group (hereinafter, also referred to as "ionizing radiation-curable compound"). Examples of the ionizing radiation-curable functional group include ethylenically unsaturated bonding groups, such as an (meth) acryloyl group, a vinyl group, and an allyl group; an epoxy group; and an oxetanyl group. The ionizing radiation-curable compound is preferably a compound having an ethylenically unsaturated bonding group, more preferably a compound having two or more ethylenically unsaturated bonding groups. Among these, still more preferred are polyfunctional (meth) acrylate compounds having two or more ethylenically unsaturated bonding groups. Either of a monomer or an oligomer of a polyfunctional (meth)acrylate compound can be used.

The ionizing radiation means that having an energy quantum which can polymerize or cross-link molecules, among electromagnetic waves or charged particle beams, and as the ionizing radiation, usually ultraviolet light (UV) or an electron beam (EB) is used. Besides, electromagnetic waves, such as X-rays and $\gamma$-rays, and charged particle beams, such as $\alpha$-rays and ionic lines, can also be used.

Among polyfunctional (meth)acrylate compounds, examples of bifunctional (meth)acrylate monomers include ethylene glycol di(meth)acrylate, bisphenol A tetraethoxy diacrylate, bisphenol A tetrapropoxy diacrylate, and 1,6-hexanediol diacrylate.

Examples of tri- or higher functional (meth)acrylate monomers include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate.

These (meth)acrylate monomers above may have a molecule skeleton partially modified. For example, the (meth)acrylate monomers having a molecule skeleton partially modified with ethylene oxide, propylene oxide, caprolactone, isocyanuric acid, an alkyl, a cyclic alkyl, an aromatic, or bisphenol can also be used.

Examples of polyfunctional (meth)acrylate oligomers include acrylate polymers such as urethane (meth) acrylate, epoxy (meth)acrylate, polyester (meth)acrylate, and polyether (meth)acrylate.

For example, urethane (meth)acrylate is prepared by a reaction of a polyhydric alcohol and an organic diisocyanate with hydroxy (meth)acrylate.

Preferred epoxy (meth)acrylates are (meth)acrylates prepared by reacting a tri- or higher functional aromatic epoxy resin, alicyclic epoxy resin, aliphatic epoxy resin, or the like with (meth)acrylic acid; (meth)acrylates prepared by reacting a bi- or higher functional aromatic epoxy resin, alicyclic epoxy resin, aliphatic epoxy resin, or the like with a polybasic acid and (meth)acrylic acid; and (meth)acrylates prepared by reacting a bi- or higher functional aromatic epoxy resin, alicyclic epoxy resin, aliphatic epoxy resin, or the like with phenols and (meth)acrylic acid.

The polyfunctional (meth)acrylate oligomer has a number average molecular weight of preferably 500 or more and 3000 or less, preferably 600 or more and 2000 or less, and still more preferably 700 or more and 1200 or less.

In this specification, the weight average molecular weight is the average molecular weight determined with respect to standard polystyrenes in measurement by GPC analysis.

In order to adjust the viscosity of the resin layer coating solution, a monofunctional (meth)acrylate as an ionizing radiation-curable compound may be used in combination. Examples of the monofunctional (meth)acrylate include methyl (meth)acrylate, ethyl (meth)acrylate, propyl (meth)acrylate, butyl (meth)acrylate, pentyl (meth)acrylate, hexyl (meth) acrylate, cyclohexyl (meth)acrylate, 2-ethylhexyl (meth)acrylate, lauryl (meth)acrylate, stearyl (meth)acrylate, and isobornyl (meth)acrylate.

These ionizing radiation-curable compounds above can be used alone or in combination.

When the ionizing radiation-curable compound is an ultraviolet light-curable compound, the ionizing radiation-curable composition preferably contains additives such as a photopolymerization initiator and a photopolymerization accelerator.

Examples of the photopolymerization initiator include one or more selected from the group consisting of acetophenone, benzophenone, $\alpha$-hydroxyalkylphenones, Michler's ketone, benzoin, benzyl dimethyl ketal, benzoyl benzoate, $\alpha$-acyloxime esters, and thioxanthones.

The photopolymerization accelerator can reduce inhibition of polymerization due to air during curing, and accelerate the curing rate. Examples of the accelerator include p-dimethylaminobenzoic acid isoamyl ester and p-dimethylaminobenzoic acid ethyl ester.

When the binder resin contains a cured product of the ionizing radiation curable-resin composition, the ionizing radiation curable-resin composition preferably contains a polyfunctional (meth)acrylate monomer and a polyfunctional (meth)acrylate oligomer.

The mass ratio of the polyfunctional (meth)acrylate monomer and the polyfunctional (meth)acrylate oligomer is preferably 1:99 to 30:70, more preferably 5:90 to 20:80, still more preferably 7:93 to 15:85.

By using the polyfunctional (meth)acrylate monomer in a predetermined or higher proportion, favorable scratch resistance of the resin layer can be readily obtained.

By using the polyfunctional (meth)acrylate oligomer in a predetermined or higher proportion, the viscosity of the resin layer coating solution can be increased, readily suppressing sinking of the matting agent to a lower portion of the resin layer. This can readily control the Sdr to $1.0 \times 10^{-5}$ or more with a relatively small amount of the matting agent. By using the polyfunctional (meth)acrylate oligomer in a predetermined or higher proportion, readily suppressing cracking in the resin layer, and readily suppressing dropping off of the antiviral agent and the matting agent from the resin layer. In contrast, when the polyfunctional (meth)acrylate oligomer is used in an excessively high proportion, the strength of the resin layer may be reduced in some cases. When the viscosity of the resin layer coating solution is excessively high, the Sdr may be excessively increased in some cases. For this reason, the ionizing radiation curable-resin composition preferably contains a predetermined amount of the polyfunctional (meth)acrylate oligomer and a predetermined amount of the polyfunctional (meth)acrylate monomer.

<<Antiviral agent>>

Examples of the antiviral agent include an organic antiviral agent and an inorganic antiviral agent, and the inorganic antiviral agent is preferable because of high heat resistance, sustainability, and safety.

Examples of the organic antiviral agent include one or two or more selected from a haloalkylthio-type antiviral agent, a thiazole-type antiviral agent, a benzimidazole-type antiviral agent, an isophthalonitrile-type antiviral agent, a phenol-type antiviral agent, a triazine-type antiviral agent, a bromine-type antiviral agent, a quaternary-ammonium-salt-type antiviral agent, an organometal-type antiviral agent, an organic-iodine-type antiviral agent, and a pyridine-type antiviral agent.

Examples of the inorganic antiviral agent include an antiviral agent supporting or containing a metal ion on a support.

The metal ion is preferably any one of silver, zinc, and copper, and more preferably silver.

The support is preferably an inorganic compound such as zeolite, apatite, glass, molybdenum, zirconium phosphate, and titanium phosphate.

The zeolite is an aluminosilicate salt of an alkali metal or an alkali earth metal, and any one of natural zeolite and synthetic zeolite may be used. The zeolite is classified into A type, faujasite type (X type and Y type), mordenite type, clinoptilolite type, and the like based on the crystal structure, and any one of them may be used.

The apatite is a generic name of minerals having a composition represented by the following general formula.

$$M_{10}(ZO_4)_3X_2$$

In the above formula, M represents Ca, Ba, Mg, Na, K, Fe, Al, and the like, Z represents P, S, Si, As, and the like, and X represents F, Cl, O, OH, and the like. Representative examples corresponding to the above formula include fluorine apatite "$Ca_{10}(PO_4)_6F_2$" and hydroxy apatite "$Ca_{10}(PO_4)_6(OH)_2$".

Examples of the glass include soda glass, borosilicate glass, lead glass, aluminosilicate glass, borate glass, and phosphate glass.

Examples of the zirconium phosphate include hexagonal zirconium phosphate.

A method for supporting or containing the metal ion in the support is appropriately selected from common methods. Here, "containing the metal ion" means holding the metal ion or a substance that can generate the metal ion in the support with a given form. In addition, "the substance that can generate the meta ion" means a substance to generate the metal ion with an external factor or a time-dependent factor, such as, for example, a substance to generate the metal ion by dissolution in water or the like.

Examples of a specific supporting or containing form include: a supporting method with physical adsorption or chemical adsorption; a supporting method with ion exchange; a supporting method with a binding agent; a containing method by injecting a silver compound into the support; a supporting or containing method by forming a thin layer of a silver compound on a surface of the support by a thin-film forming method such as vapor deposition, a dissolution-precipitation reaction, and sputtering; and a method of ion-exchanging a metal oxide such as glass at high temperature. Among the above-mentioned forms, the supporting method with ion exchange is preferable.

The antiviral agent has preferably a particle shape for favorable processability and a readily stable antiviral effect. Examples of the particle shape include spherical, oval, polygonal, and flake shapes, and not particularly limited.

An average particle size of the antiviral agent is preferably 0.1 μm or more, more preferably 0.5 μm or more to readily suppress burying in the resin layer. The average particle size of the antiviral agent is preferably 20 μm or less, more preferably 10 μm or less to suppress appearance failure and deterioration of scratch resistance due to exposure of the antiviral agent from the resin layer. Even when the antiviral agent has a large average particle size, increasing a thickness of the resin layer can suppress the exposure of the antiviral agent from the resin layer. However, a larger thickness of the resin layer deteriorates transparency of the optical film. For this reason, the average particle size of the antiviral agent is preferably 20 μm or less as noted above.

Examples of an embodiment of a preferable range of the average particle size of the antiviral agent include 0.1 μm or more and 20 μm or less, 0.1 μm or more and 10 μm or less, 0.5 μm or more and 20 μm or less, and 0.5 μm or more and 10 μm or less.

In the present specification, the average particle size of the antiviral agent means a value measured by (1) to (3) below.

(1) A cross-section of a film is photographed with a scanning transmissive electron microscope (STEM). The accelerating voltage of the STEM is set at 10 kv or higher and 30 kV or lower, and the magnification is set at 50000x or more and 300000x or less.

(2) Any 10 antiviral agents are extracted from the image for observation, and the particle size of each of the antiviral agents is calculated. The cross-section of an antiviral agent is sandwiched between two given parallel straight lines, and the combination of the lines that maximizes the distance between the two straight lines is identified. The distance between the two straight lines identified as described above is defined as the particle size of each of the antiviral agents.

(3) The same operation is performed five times on an image for observation of the same sample on another screen, and the number average of 50 particle sizes in total is defined as the average particle size of the antiviral agents.

A content of the antiviral agent is preferably 1.0 part by mass or more and 15.0 parts by mass or less relative to 100 parts by mass of the binder resin. By controlling the content of the antiviral agent to 1.0 part by mass or more, favorable antiviral properties can be readily obtained. By controlling the content of the antiviral agent to 15.0 parts by mass or less, deterioration of visibility can be more readily suppressed.

The lower limit of the content of the antiviral agent is more preferably 2.0 parts by mass or more, still more preferably 2.5 parts by mass or more, still further preferably 3.0 parts by mass or more relative to 100 parts by mass of the binder resin. The upper limit is more preferably 10.0 parts by mass or less, still more preferably 8.0 parts by mass or less, still further preferably 7.0 parts by mass or less.

<<Matting agent>>

The resin layer preferably contains a matting agent. The resin layer, when containing the matting agent, can readily control the Sdr on the resin layer surface within the above range while reducing the content of the antiviral agent.

The antiviral agent tends to have a large refractive index. If the Sdr is controlled within the above range with only the antiviral agent not using the matting agent, the content of the antiviral agent increases to tends to increase an internal haze of the optical film. The increase in the internal haze of the optical film tends to deteriorate resolution of the display element. To readily control the Sdr within the above range while suppressing the increase in the internal haze, the resin layer preferably contains the matting agent in addition to the antiviral agent.

Examples of the matting agent include an organic matting agent and an inorganic matting agent. Examples of the shape of the matting agent include spherical, oval, polygonal, and flake shapes, and not particularly limited.

Examples of the organic matting agent include a matting agent containing one or more resins selected from polymethyl methacrylate, polyacryl-styrene copolymer, melamine resin, polycarbonate, polystyrene, polyvinyl chloride, benzoguanamine-melamine-formaldehyde condensate, silicone, fluororesin, polyester resin, and the like.

Examples of the inorganic matting agent include a matting agent containing one or more inorganic compounds selected from silica, alumina, zirconia, titania, and the like.

To more suppress deterioration of visibility, the matting agent is preferably silica. Among the silica, preferable is fumed silica in which the size of secondary particles is readily controlled.

The fumed silica is amorphous silica produced by a dry method, and can be obtained by reacting a volatile compound containing silicon in a gas phase. Specific examples thereof include silica generated by hydrolysis of a silicon compound such as silicon tetrachloride in flame of oxygen and hydrogen. The fumed silica is preferable in terms of ease of hydrophobizing the surface.

The surface of the inorganic matting agent is preferably subjected to a hydrophobizing treatment. The hydrophobizing treatment of the surface can suppress excessive aggregation of the inorganic matting agent.

Examples of a surface-treating agent for the hydrophobizing treatment include trimethylsilyl chloride, dimethyldichlorosilane, trimethylsilyl trifluoromethanesulfonate, chloromethyltrimethylsilane, hexamethyldisilazane, triethylsilane, triethylsilyl chloride, triisopropylsilyl chloride, t-butyldimethylsilane, t-butyldimethylsilyl chloride, octylsilane, hexadecylsilane, allyltrimethylsilane, trimethylvinylsilane, aminosilane, methacrylsilane, and polydimethylsiloxane.

An average primary particle diameter of the organic matting agent is preferably 1.0 $\mu$m or more and 6.0 $\mu$m or less, more preferably 2.0 $\mu$m or more and 4.0 $\mu$m or less. Increasing the average primary particle diameter of the organic matting agent tends to increase the Sdr. The organic matting agent is preferably contained in the resin layer as a form of primary particles.

An average primary particle diameter of the inorganic matting agent is preferably 5 nm or more and 50 nm or less, more preferably 7 nm or more and 30 nm or less to control the Sdr within the above range.

To readily control the Sdr within the above range, the inorganic matting agent is preferably contained in the resin layer as a form of secondary particles. A larger secondary particle diameter of the inorganic matting agent tends to increase the Sdr.

The secondary particles of the inorganic matting agent preferably have an average secondary particle diameter of 100 nm or more and 1 $\mu$m or less.

In the present specification, the average particle size of the matting agent means a value measured by (1) to (3) below. When the average primary particle diameter is calculated, particles to be extracted in (2) below are primary particles. When the average secondary particle diameter is calculated, particles to be extracted in (2) below are secondary particles.

(1) A transmissive observation image of an optical film is photographed with an optical microscope. The magnification is set at 500x or more and 2000x or less.

(2) Any 10 matting agents are extracted from the image for observation, the long diameter and the short diameter of each of the matting agents are measured, and the particle size of each of the particles is calculated from averages of the long diameter and the short diameter. The long diameter is a longest diameter on the screen of each of the matting agents. The short diameter is a distance determined by drawing a line perpendicular to a middle point on a line constituting the long diameter to specify the diameter between two points on the perpendicular line crossing with the matting agent.

(3) The same operation is performed five times on an image for observation of the same sample on another screen, and the number average of 50 particle sizes in total is defined as the average particle size of the matting agents.

A content of the matting agent is preferably 5 parts by mass or more and 30 parts by mass or less relative to 100 parts by mass of the binder resin. By controlling the content of the matting agent within the above range, the Sdr can be readily controlled within the above range.

The lower limit of the content of the matting agent is more preferably 7 parts by mass or more, still more preferably 9 parts by mass or more, still further preferably 10 parts by mass or more relative to 100 parts by mass of the binder resin. The upper limit is more preferably 27 parts by mass or less, still more preferably 25 parts by mass or less, still further preferably 20 parts by mass or less.

The resin layer may contain additives such as an antioxidant, an ultraviolet absorbing agent, and a light stabilizer in the range not inhibiting the effects of the present disclosure.

<<Thickness>>

For a balance among suppression of curling, mechanical strength, hardness, and toughness, the thickness of the resin layer is preferably 2.0 $\mu$m or more and 10.0 $\mu$m or less, more preferably 3.0 $\mu$m or more and 9.0 $\mu$m or less, still more preferably 4.0 $\mu$m or more and 8.0 $\mu$m or less.

The thickness of the resin layer is determined by selecting any 20 points in a cross-sectional photograph of the optical film taken by a scanning transmissive electron microscope, and calculating the average thereof. The STEM is set at an accelerating voltage of 10 kV or more and 30 kV or less and a magnification of 1000x or more and 7000x or less.

In the present specification, a sample for photographing the image of the cross-section of the optical film is produced as follows.

An optical film cut to 2 mm × 5 mm is put in a silicone-based embedding plate, and an epoxy-based resin as an embedding resin is poured to embed the entire optical film with the resin. The embedding resin is left to stand at 65°C for 12 hours or longer for curing, and then an ultrathin slice is produced by using an ultramicrotome with setting a feeding thickness of 100 nm. The produced ultrathin slice is collected with a mesh (150) having a collodion film to be used as a sample for the scanning transmissive electron microscope (STEM) observation.

Since the observation image with STEM may be hardly observed without conductivity, the sample may be subjected to sputtering with Pt-Pd for about 20 seconds. The sputtering time may be appropriately controlled. However, it should be noted that 10 seconds is short and 100 seconds causes the sputtered metal to be a particle foreign matter image.

When an interface between the resin layer and the layer contacting with the resin layer is hardly observed, the sample may be dyed with osmium tetroxide or the like.

<<Solvent>>

To adjust the viscosity and enable dissolution or dispersion of the components, the resin layer coating solution preferably contains a solvent. Because the surface profile of the resin layer after application and drying is varied according to the type of the solvent, it is preferred that the solvent be selected considering the saturated vapor pressure of the solvent, the permeability of the solvent to the substrate, and the like.

Specifically, examples of the solvent include ketones (such as acetone, methyl ethyl ketone, methyl isobutyl ketone (MIBK), and cyclohexanone), ethers (dioxane and tetrahydrofuran), aliphatic hydrocarbons (such as hexane), alicyclic hydrocarbons (such as cyclohexane), aromatic hydrocarbons (such as toluene and xylene), halogenated carbons (such as dichloromethane and dichloroethane), esters (such as methyl acetate, ethyl acetate, and butyl acetate), alcohols (such as isopropanol, butanol, and cyclohexanol), cellosolves (such as methyl cellosolve and ethyl cellosolve), glycol ethers (such as propylene glycol monomethyl ether acetate), cellosolve acetates, sulfoxides (such as dimethyl sulfoxide), and amides (such as dimethylformamide and dimethylacetamide). Mixtures thereof may also be used.

The solvent in the resin layer coating solution preferably contains a solvent having a high evaporation rate, as the main component. A high evaporation rate of the solvent can readily suppress sinking of the antiviral agent and the matting agent to the lower portion of the resin layer. This can reduce the content of the antiviral agent and readily control the Sdr to be $1.0 \times 10^{-5}$ or more with a relatively small amount of the matting agent.

The main component indicates that the content of the component is 50% by mass or more relative to the total amount of the solvent, and the content is preferably 70% by mass or more, more preferably 80% by mass or more, still more preferably 85% by mass or more.

In this specification, the solvent having a high evaporation rate indicates a solvent having an evaporation rate of 100 or more where the evaporation rate of butyl acetate is regarded as 100. The evaporation rate of the solvent having a high evaporation rate is more preferably 120 or more and 300 or less, still more preferably 150 or more and 220 or less.

Examples of the solvent having a high evaporation rate include isopropyl alcohol (evaporation rate: 150), methyl isobutyl ketone (evaporation rate: 160), toluene (evaporation rate: 200), and methyl ethyl ketone (evaporation rate: 370).

On the other hand, examples of a solvent having a low evaporation rate of less than 100 include cyclohexanone (evaporation rate: 32) and propylene glycol monomethyl ether acetate (evaporation rate: 44).

The drying conditions are preferably controlled when the resin layer is formed from the resin layer coating solution.

The drying conditions can be controlled by the drying temperature and the air rate inside the dryer. The drying temperature is preferably 30°C or more and 120°C or less, and the air rate for drying is preferably 2 m/s or more and 7 m/s or less. To control the surface profile of the resin layer by drying, irradiation with the ionizing radiation is suitably performed after the drying of the coating solution.

<Substrate>

The optical film preferably includes a substrate for easy production of the optical film and handling properties of the optical film.

Preferably, the substrate has light transmissivity, smoothness, and heat resistance, and further has high mechanical strength. Examples of such a substrate include plastic films of polyester, triacetylcellulose (TAC), cellulose diacetate, cellulose acetate butyrate, polyamide, polyimide, polyether sulfone, polysulfone, polypropylene, polymethylpentene, polyvinyl chloride, polyvinyl acetal, polyether ketone, polymethyl methacrylate, polycarbonate, polyurethane, and amorphous olefin (Cyclo-Olefin-Polymer: COP). The substrate may be two or more plastic films bonded to each other.

Among these plastic films, stretched polyester films are preferred, and biaxially stretched polyester films are more preferred for mechanical strength and dimensional stability. Examples of polyester films include polyethylene terephthalate films and polyethylene naphthalate films. TAC films and acrylic films are suitable because favorable light transmissivity and optical isotropy are readily obtained. COP films and polyester films are suitable for their high weatherability.

The substrate has a thickness of preferably 5 $\mu$m or more and 300 $\mu$m or less, more preferably 20 $\mu$m or more and 200 $\mu$m or less, still more preferably 30 $\mu$m or more and 120 $\mu$m or less.

When the optical film is formed into a thin film, a preferred upper limit of the thickness of the substrate is 100 $\mu$m or less, and a more preferred upper limit is 80 $\mu$m or less. When the substrate is a low moisture-permeable substrate made of polyester, COP, acrylic resin, or the like, a preferred upper limit of the thickness of the substrate for formation of a thin film is 60 $\mu$m or less, and a more preferred upper limit is 40 $\mu$m or less. Even in the case of large screens, distortions are difficult to occur as long as the upper limit of the thickness of the substrate falls within the ranges specified above, which is also suitable.

The thickness of the substrate is measured by the following procedure.

(1) By using a contact-type film thickness measurement device, a total thickness of the optical film is measured at given ten positions. An average value of the thickness at the ten positions is specified as a total thickness of the optical film. Examples of the contact-type film thickness measurement device include a digimatic standard outside micrometer (model name: MDC-25SX) available from Mitutoyo Corporation.

(2) A total thickness of layers, which constitute the optical film, other than the substrate is subtracted from the layer thickness of the (1) to calculate the thickness of the substrate. The thickness of the layers other than the substrate is calculated from the cross-sectional image of the optical film.

The substrate has a total light transmittance specified in JIS K7361-1:1997 of preferably 70% or more, more preferably 80% or more, still more preferably 85% or more.

The substrate has a haze specified in JIS K7136:2000 of preferably 10% or less, more preferably 5% or less, still more preferably 3% or less.

To improve adhesiveness, the surface of the substrate may be subjected to a physical treatment such as a corona discharge treatment, or a chemical treatment. The substrate may comprise an easily adhesive layer on the surface thereof.

<Antiviral activity value>

An antiviral activity value of the optical film of the present disclosure measured in accordance with the antiviral property test in ISO 21702:2019 is preferably 2.0 or more.

<Optical properties>

The total light transmittance of the optical film specified in JIS K7361-1:1997 is preferably 85.0% or more, more preferably 87.0% or more, still more preferably 89.0% or more to readily obtain favorable visibility.

In the optical film, the haze specified in JIS K7136:2000 is preferably 80.0% or less, more preferably 60.0% or less, still more preferably 40.0% or less, further preferably 30.0% or less to provide favorable visibility.

The lower limit of the haze is not particularly limited, and typically 1.0% or more.

To readily suppress deterioration of resolution of the display element, the optical film has an internal haze of preferably 28.0% or less, more preferably 15.0% or less, still more preferably 10.0% or less. The lower limit of the internal haze is not particularly limited, and typically 1.0% or more.

The internal haze of the optical film is measured by the following procedure.

(1) A transparent sheet is bonded to the surface on the resin layer side of the optical film via a transparent adhesive layer to produce a laminate. The difference between the refractive index of the binder resin of the resin layer and that of the adhesive of the transparent adhesive layer is 0.05 or less.

(2) The haze in accordance with JIS K7136:2000 of the laminate produced in the (1) is measured to specify the obtained value as the internal haze of the optical film.

In the optical film, a transmissive image clarity when the width of the optical comb is 0.125 mm in accordance with JIS K7374:2007 is preferably 2.5% or more, more preferably 10% or more, still more preferably 30% or more to readily obtain favorable visibility.

<Size, shape, and the like>

The optical film may be in a sheet-like form cut into a predetermined size, or may be in a roll-like form of an elongated sheet wound into a roll. Although the sheet can have any size, the maximum diameter is about 2 inches or more and 500 inches or less. The "maximum diameter" indicates the maximum length between any two points in the optical film when they are connected. For example, when the optical film is in a rectangular shape, the diagonal line of the region corresponds to the maximum diameter. When the optical film is in a circular shape, the diameter of the circle corresponds to the maximum diameter.

Although the width and length of the roll-like form are not particularly limited, usually, the width is about 500 mm or more and 3000 mm or less, and the length is about 500 m or more and 5000 m or less. The optical film in the roll-like form, when used, can be cut into sheets according to the size of the image display device. When the optical film is cut, preferably, roll ends having unstable physical properties are removed.

The sheet can have any shape, and examples of the shape include polygonal shapes such as triangular, rectangular, and pentagonal shapes, circular shapes, and random amorphous shapes. More specifically, when the optical film is in a rectangular shape, the optical film can have any aspect ratio as long as it causes no problems as the display screen.

[Image display panel]

The image display panel according to the present disclosure includes: a display element; and the above-mentioned antiviral optical film according to the present disclosure disposed on the display element,
wherein the antiviral optical film is disposed on the topmost surface of the image display panel, and is disposed such that a surface on a side of the resin layer of the antiviral optical film faces a side opposite to the display element.

Fig. 2 is a cross-sectional schematic view of a cross-sectional shape of an image display panel 120 of the present disclosure. The image display panel 120 in Fig. 2 has a display element 110 and the antiviral optical film 100 of the present disclosure disposed on the display element. In Fig. 2, the antiviral optical film 100 is disposed on the topmost surface of the image display panel 120, and is disposed such that a surface on a side of the resin layer 20 of the antiviral optical film 100 faces a side opposite to the display element 110.

Examples of the display element include liquid crystal display elements, EL display elements (organic EL display elements, inorganic EL display elements), and plasma display elements. Furthermore, examples thereof include LED display elements such as micro LED display elements. These display elements may have a touch panel function inside thereof.

Examples of liquid crystal display methods for liquid crystal display elements include an IPS method, a VA method, a multi-domain method, an OCB method, an STN method, and a TSTN method. When the display element is a liquid crystal display element, backlight is needed. The backlight is disposed on the side opposite to the side of the liquid crystal display element on which the optical film is disposed.

The image display panel according to the present disclosure may be an image display panel with a touch panel, comprising a touch panel between the display element and the optical film. In this case, the optical film can be disposed on the topmost surface of the image display panel with a touch panel while the side of the optical film including the resin layer faces the side opposite to the display element.

Although the image display panel can have any size, the maximum diameter is about 2 inches or more and 500 inches or less. The maximum diameter indicates the maximum length between any two points in a plane of the image display panel when they are connected.

[Image display device]

The image display device according to the present disclosure comprises the above-mentioned image display panel according to the present disclosure.

Within the image display device, the antiviral optical film is disposed on the topmost surface of the image display device.

Preferably, the image display device according to the present disclosure further comprises a drive controller electrically connected to the image display panel, and a housing which accommodates the image display panel and the drive controller.

When the display element is a liquid crystal display element, the image display device according to the present disclosure needs a backlight. The backlight is disposed on the side opposite to the light-emitting surface side of the liquid crystal display element.

Although the image display device can have any size, the maximum diameter of the effective display region is about 2 inches or more and 500 inches or less.

The effective display region of the image display device is a region which can display an image. For example, when the image display device comprises a housing surrounding the display element, the region inside the housing corresponds to the effective image region.

The maximum diameter of the effective image region indicates the maximum length between any two points inside the effective image region when they are connected. For example, when the effective image region is in a rectangular shape, the diagonal line of the region corresponds to the maximum diameter. When the effective image region is in a circular shape, the diameter of the region corresponds to the maximum diameter.

Examples

Next, the present disclosure will be described in more detail by way of Examples, but these examples should not be construed as limitations to the present disclosure. The terms "parts" and "%" are mass-based unless otherwise specified.

1. Measurements and evaluations

As described below, optical films in Examples and Comparative Examples were measured and evaluated. The atmosphere in the measurements and evaluations was set at a temperature of 23±5°C and a relative humidity of 40% or more and 65% or less. Before each measurement and evaluation were started, the target samples were exposed to the atmosphere for 30 minutes or more and 60 minutes or less, followed by the measurement and the evaluation. Note that the antiviral properties were measured in accordance with the specification of ISO. The results are shown in Table 1.

1-1. Measurement of surface profile

Optical films in Examples and Comparative Examples were cut into a size of 10 cm × 10 cm. The optical films were visually checked, and their cut portions were selected at random from portions without abnormalities such as dirt or scratches. The substrate side of each cut optical film was bonded to a glass plate (thickness: 2.0 mm) having a length of 10 cm × a width of 10 cm with an optical transparent adhesive sheet (trade name: PANACLEAN PD-S1, thickness: 25 $\mu$m) available from PANAC CO., LTD. to prepare a sample 1.

Using a confocal laser microscope (VK-X250 (controller) and VK-X260 (measurement section)) available from Keyence Corporation, the sample 1 was set on the measurement stage to be fixed and tightly adhere to the stage, and thereafter the surface profile of the anti-glare film was measured and analyzed on the measurement conditions 1, image processing conditions 1, and analysis conditions 1 below. Multi-file analysis application (version 1.3.1.120) was used as analysis software.

(Measurement conditions 1)

Laser wavelength: 408 nm
Optical system for measurement: confocal optical system
Object lens: 150x
Zoom: 1x
Region for measurement: 93.95 $\mu$m × 70.44 $\mu$m
The number of measurement points: 1024 × 768 points
Measurement conditions: surface profile of a transparent object/high precision/with double scan

(Image processing conditions 1)

- DCL/BCL: DCL=13000, BCL=65535, processing method: complement from surrounding pixels
- Height cut level: strong

(Analysis conditions 1)

- Region: the entire region
- Filter type: Gaussian
- S-filter: 0.25 $\mu$m
- F-operation: plane tilt correction (region specified)
- L-filter: none

- End effect correction: ON
- s during calculation of Sal: s = 0.20

The "Sdr", "Sa", "Sal", and "Spc" in each measurement region were displayed from the analysis software, and were defined as measured values.

1-2. Total light transmittance and haze

Optical films in Examples and Comparative Examples each were cut into a 10 cm square. The optical films were visually checked, and their cut portions were selected at random from portions without abnormalities such as dirt or scratches. Using a haze meter (HM-150, available from MURAKAMI COLOR RESEARCH LABORATORY), the samples were measured for total light transmittance specified in JIS K7361-1:1997 and haze specified in JIS K7136:2000.

To stabilize the light source, the apparatus was on standby for 15 minutes or longer since the power supply switch was turned on. Calibration was performed without setting anything in the inlet opening. Subsequently, the sample to be measured was set in the inlet opening, and was measured. The light incident surface was the substrate side.

On the surface on the resin layer side of the optical films in Examples and Comparative Examples, a TAC film (available from FUJIFILM Corporation, TD80UL) having a thickness of 80 $\mu$m was bonded via a transparent adhesive (available from PANAC CO., LTD., PD-S1, thickness: 25 $\mu$m) to produce a laminate. The haze of the laminate specified in JIS K7136:2000 was measured to specify the obtained value as the internal haze of the optical film.

1-3. Transmissive image clarity

Optical films in Examples and Comparative Examples each were cut into a 10 cm square. The optical films were visually checked, and their cut portions were selected at random from portions without abnormalities such as dirt or scratches. Using an image clarity meter (trade name: ICM-1T) available from Suga Test Instruments Co., Ltd., the samples were measured for transmissive image clarity when the width of the optical comb was 0.125 mm in accordance with JIS K7374:2007. The light incident surface was the coated surface side.

1-4. Antiviral properties

In accordance with the antiviral properties test in ISO 21702:2019, an antiviral activity value of the optical films in Examples and Comparative Examples was measured. As virus, H3N2-type influenza virus and feline calicivirus were used. An antiviral activity value of 2.0 or more is a success level. A sample at the success level is shown as "A", and a failed sample is shown as "C".

1-5. Visibility

White display was performed with a commercially available image display device ("iPad (R) MGLW2J/A", trade name of Apple Inc.). Using a color luminance meter (trade name: CS-150) available from KONICA MINOLTA, INC., luminance of the image display device was adjusted to 300 cd/m$^2$.

Optical films in Examples and Comparative Examples were cut into a size of 10 cm $\times$ 10 cm. The optical films were visually checked, and their cut portions were selected at random from portions without abnormalities such as dirt or scratches. The substrate side of the cut optical film was bonded to the image display device with adjusted luminance via an optical transparent adhesive sheet (trade name: PANACLEAN PD-S1) available from PANAC CO., LTD. to produce a sample 2.

Under an environment of a bright room (illuminance on the sample 2 was 500 lux or more and 1000 lux or less), brightness at a position bonded to the optical film of the sample 2 and brightness of a position not bonded to the optical film of the sample 2 were visually compared and evaluated according to the following criteria. The position of the observers was distanced with 50 cm from the sample 2 in the normal line direction. The observers were 20 healthy people having a vision of 0.7 or more. Details of the 20 people were each 5 people in from 20's to 50's.

<Criteria for evaluation>

A: The number of observers who answered that they did not care lowering of the brightness at the position bonded to the optical film compared with the position not bonded to the optical film was 14 or more.
B: The number of observers who answered that they did not care lowering of the brightness was 7 or more and 13 or less.

C: The number of observers who answered that they did not care lowering of the brightness was 6 or less.

2. Production of optical film

[Example 1]

A resin layer coating solution 1 described below was applied onto a transparent substrate (triacetyl cellulose resin film having a thickness of 80 μm, FUJIFILM Corporation, TD80UL). In the next step, the applied coating solution was dried at 70°C and an air rate of 5 m/s for 30 seconds. The resulting coating was then irradiated with ultraviolet light under a nitrogen atmosphere having an oxygen concentration of 200 ppm or less with an accumulated light amount of 100 mJ/cm$^2$, thereby forming a resin layer having a thickness of 6.0 μm to obtain an optical film in Example 1.

<Resin layer coating solution 1>

| | |
|---|---|
| - pentaerythritol triacrylate | 75 parts |
| (NIPPON KAYAKU Co., Ltd., trade name: KAYARAD-PET-30) | |
| - mixture of ethoxylated isocyanuric acid diacrylate and ethoxylated isocyanuric acid triacrylate | 10 parts |
| (TOAGOSEI CO., LTD., trade name: M-313) | |
| - urethane acrylate oligomer | 15 parts |
| (DIC Corporation, trade name: Unidic V-4000BA, number average molecular weight: 877) | |
| - inorganic antiviral agent | 7 parts |
| (antiviral agent in which silver ions were supported on hexagonal zirconium phosphate by ion exchange) | |
| (TOAGOSEI CO., LTD., trade name: Novaron AG300, average particle size: 1.0 μm) | |
| - inorganic matting agent | 10 parts |
| (silica particles with hydrophobizing-treated surface, average primary particle diameter: 12 nm) | |
| (NIPPON AEROSIL CO., LTD., fumed silica) | |
| - photopolymerization initiator | 4 parts |
| (IGM Resins B.V., trade name: Omnirad 184) | |
| - silicone leveling agent | 0.15 parts |
| (Momentive Performance Materials Inc., trade name: TSF4460) | |
| - solvent (toluene) | 155 parts |
| - solvent (cyclohexanone) | 25 parts |
| - solvent (isopropyl alcohol) | 45 parts |

[Example 2]

A resin layer coating solution 2 was prepared with replacing the following points from the resin layer coating solution 1. An optical film in Example 2 was prepared in the same manner as in Example 1 except that the resin layer coating solution 1 was replaced by the resin layer coating solution 2.

<Changes in resin layer coating solution 2>

- The content of the antiviral agent was changed from 7 parts to 5 parts.
- The content of the inorganic matting agent was changed from 10 parts to 6 parts.
- An organic matting agent was added at 14 parts. As the organic matting agent, spherical polyacryl-styrene copolymer having an average particle size of 3.0 μm available from Sekisui Kasei Co., Ltd. was used.

[Example 3]

A resin layer coating solution 3 was prepared with replacing the following points from the resin layer coating solution 1. An optical film in Example 3 was prepared in the same manner as in Example 1 except that the resin layer coating solution 1 was replaced by the resin layer coating solution 3.

<Changes in resin layer coating solution 3>

- The content of the inorganic matting agent was changed from 10 parts to 0 parts (changed to formulation containing no inorganic matting agent).
- An organic matting agent was added at 25 parts. As the organic matting agent, spherical polyacryl-styrene copolymer having an average particle size of 3.0 μm available from Sekisui Kasei Co., Ltd. was used.

[Comparative Example 1]

A resin layer coating solution 4 was prepared with replacing the following point from the resin layer coating solution 1. An optical film in Comparative Example 1 was prepared in the same manner as in Example 1 except that the resin layer coating solution 1 was replaced by the resin layer coating solution 4.

<Changes in resin layer coating solution 4>

- The content of the inorganic matting agent was changed from 10 parts to 0 parts (changed to formulation containing no inorganic matting agent).

[Comparative Example 2]

A resin layer coating solution 5 was prepared with replacing the following points from the resin layer coating solution 1. An optical film in Comparative Example 2 was prepared in the same manner as in Example 1 except that the resin layer coating solution 1 was replaced by the resin layer coating solution 5.

<Changes in resin layer coating solution 5>

- The content of the antiviral agent was changed from 7 parts to 10 parts.
- The content of the inorganic matting agent was changed from 10 parts to 0 parts (changed to formulation containing no inorganic matting agent).
- An organic matting agent was added at 3 parts. As the organic matting agent, spherical polyacryl-styrene copolymer having an average particle size of 3.0 μm available from Sekisui Kasei Co., Ltd. was used.

[Comparative Example 3]

A resin layer coating solution 6 was prepared with replacing the following points from the resin layer coating solution 1. An optical film in Comparative Example 3 was prepared in the same manner as in Example 1 except that the resin layer coating solution 1 was replaced by the resin layer coating solution 6.

<Changes in resin layer coating solution 6>

- The content of the antiviral agent was changed from 7 parts to 20 parts.
- The content of the inorganic matting agent was changed from 10 parts to 0 parts (changed to formulation containing no inorganic matting agent).

[Comparative Example 4]

A resin layer coating solution 7 was prepared with replacing the following points from the resin layer coating solution 1. An optical film in Comparative Example 4 was prepared in the same manner as in Example 1 except that the resin layer coating solution 1 was replaced by the resin layer coating solution 7.

<Changes in resin layer coating solution 7>

- The content of the antiviral agent was changed from 7 parts to 3 parts.
- The content of the inorganic matting agent was changed from 10 parts to 20 parts.
- An organic matting agent was added at 25 parts. As the organic matting agent, spherical polyacryl-styrene copolymer having an average particle size of 3.0 μm available from Sekisui Kasei Co., Ltd. was used.

[Comparative Example 5]

A resin layer coating solution 8 was prepared with replacing the following points from the resin layer coating solution 1. An optical film in Comparative Example 5 was prepared in the same manner as in Example 1 except that the resin layer coating solution 1 was replaced by the resin layer coating solution 8.

<Changes in resin layer coating solution 8>

- The content of the antiviral agent was changed from 7 parts to 5 parts.
- The content of the inorganic matting agent was changed from 10 parts to 3 parts.

[Example 4]

A resin layer coating solution 9 was prepared with replacing the following points from the resin layer coating solution 1. An optical film in Example 4 was prepared in the same manner as in Example 1 except that the resin layer coating solution 1 was replaced by the resin layer coating solution 9.

<Changes in resin layer coating solution 9>

- The inorganic antiviral agent was replaced by an organic antiviral agent, and the content of the antiviral agent was changed from 7 parts to 3 parts. As the organic antiviral agent, trade name: "SLAMONIE D100" available from Osaka Gas Chemicals Co., Ltd. was used.
- The content of the inorganic matting agent was changed from 10 parts to 8 parts.
- An organic matting agent was added at 10 parts. As the organic matting agent, spherical polyacryl-styrene copolymer having an average particle size of 3.0 μm available from Sekisui Kasei Co., Ltd. was used.

[Example 5]

A resin layer coating solution 10 was prepared with replacing the following points from the resin layer coating solution 1. An optical film in Example 5 was prepared in the same manner as in Example 1 except that the resin layer coating solution 1 was replaced by the resin layer coating solution 10.

<Changes in resin layer coating solution 10>

- The inorganic antiviral agent was replaced by an organic antiviral agent, and the content of the antiviral agent was changed from 7 parts to 5 parts. As the organic antiviral agent, trade name: "SLAMONIE D100" available from Osaka Gas Chemicals Co., Ltd. was used.

- The content of the inorganic matting agent was changed from 10 parts to 8 parts.
- An organic matting agent was added at 8 parts. As the organic matting agent, spherical polyacryl-styrene copolymer having an average particle size of 3.0 $\mu$m available from Sekisui Kasei Co., Ltd. was used.

Table 1

| | Blending amount (parts) | | | | Surface profile | | | | Total light transmittance [%] | Haze [%] | Internal haze [%] | Image clarity (0.125 mm) [%] | Antiviral properties | Visibility |
|---|---|---|---|---|---|---|---|---|---|---|---|---|---|---|
| | Inorganic antiviral agent | Organic antiviral agent | Organic matting agent | Inorganic matting agent | Sdr | Sa [μm] | Sal [μm] | Spc [1/mm] | | | | | | |
| Example 1 | 7 | 0 | 0 | 10 | $5.0\times10^{-3}$ | 0.074 | 11.0 | 420 | 90.7 | 14.1 | 9.3 | 79.5 | A | A |
| Example 2 | 5 | 0 | 14 | 6 | $4.0\times10^{-3}$ | 0.16 | 10.5 | 570 | 90.9 | 24.1 | 13.2 | 33.7 | A | A |
| Example 3 | 3 | 0 | 25 | 0 | $1.3\times10^{-1}$ | 0.62 | 9.9 | 800 | 89 | 47.4 | 15.7 | 2.6 | A | B |
| Example 4 | 0 | 3 | 10 | 8 | $4.4\times10^{-3}$ | 0.18 | 10.2 | 580 | 90.7 | 24.2 | 12.2 | 5.9 | A | B |
| Example 5 | 0 | 5 | 8 | 8 | $1.5\times10^{-3}$ | 0.15 | 10.6 | 570 | 90.9 | 19.0 | 11.0 | 3.1 | A | B |
| Comparative Example 1 | 7 | 0 | 0 | 0 | $1.0\times10^{-6}$ | 0.0086 | 15.9 | 380 | 91.6 | 11.8 | 10.1 | 75.2 | C | A |
| Comparative Example 2 | 10 | 0 | 3 | 0 | $5.0\times10^{-6}$ | 0.029 | 12.6 | 460 | 91.2 | 18.4 | 16.8 | 77.7 | C | A |
| Comparative Example 3 | 20 | 0 | 0 | 0 | $3.0\times10^{-6}$ | 0.031 | 10.3 | 400 | 84 | 36.3 | 29.4 | 62.3 | A | C |
| Comparative Example 4 | 3 | 0 | 25 | 20 | $1.7\times10^{-1}$ | 0.87 | 9.7 | 970 | 80 | 76.8 | 20.9 | 2.1 | A | C |
| Comparative Example 5 | 5 | 0 | 0 | 3 | $2.0\times10^{-6}$ | 0.028 | 14.4 | 410 | 91.5 | 9.2 | 5.8 | 82.1 | C | A |

The results from Table 1 verify that the optical films in Examples can have favorable antiviral properties while suppressing deterioration of visibility.

Reference Signs List

| | |
|---|---|
| 10: | substrate |
| 20: | resin layer |
| 21: | binder resin |
| 22: | antiviral agent |
| 23: | matting agent |
| 100: | antiviral optical film |
| 110: | display element |
| 120: | image display panel |

**Claims**

1. An antiviral optical film, comprising a resin layer containing a binder resin and an antiviral agent on at least one surface, wherein a surface of the resin layer has a developed interfacial area ratio Sdr specified in ISO 25178-2:2012 of $1.0 \times 10^{-5}$ or more and $1.5 \times 10^{-1}$ or less.

2. The antiviral optical film according to claim 1, wherein a content of the antiviral agent is 1.0 part by mass or more and 15.0 parts by mass or less relative to 100 parts by mass of the binder resin.

3. The antiviral optical film according to claim 1 or 2, wherein the antiviral agent is an inorganic antiviral agent.

4. The antiviral optical film according to claim 1 or 2, wherein the binder resin contains a cured product of an ionizing radiation-curable resin composition.

5. The antiviral optical film according to claim 1 or 2, wherein the resin layer further contains a matting agent.

6. The antiviral optical film according to claim 1 or 2, wherein the optical film comprises a substrate and the resin layer formed on one surface of the substrate.

7. The antiviral optical film according to claim 1 or 2, having a total light transmittance specified in JIS K7361-1:1997 of 85.0% or more.

8. The antiviral optical film according to claim 1 or 2, having a haze specified in JIS K7136:2000 of 80.0% or less.

9. An image display panel, comprising: a display element; and the antiviral optical film according to claim 1 or 2 disposed on the display element,
wherein the antiviral optical film is disposed on the topmost surface of the image display panel, and is disposed such that a surface on a side of the resin layer of the antiviral optical film faces a side opposite to the display element.

10. An image display device, comprising the image display panel according to claim 9.

[Fig. 1]

[Fig. 2]

## INTERNATIONAL SEARCH REPORT

| International application No. |
| --- |
| **PCT/JP2023/015531** |

### A. CLASSIFICATION OF SUBJECT MATTER

*G02B 5/02*(2006.01)i; *B32B 7/023*(2019.01)i; *B32B 27/18*(2006.01)i; *C09D 4/00*(2006.01)i; *C09D 7/61*(2018.01)i; *C09D 201/00*(2006.01)i; *G02F 1/1335*(2006.01)i

FI:   G02B5/02 C; G02F1/1335; B32B7/023; B32B27/18 F; C09D201/00; C09D4/00; C09D7/61; G02B5/02 Z

According to International Patent Classification (IPC) or to both national classification and IPC

### B. FIELDS SEARCHED

Minimum documentation searched (classification system followed by classification symbols)

G02B5/02; B32B7/023; B32B27/18; C09D4/00; C09D7/61; C09D201/00; G02F1/1335

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/070934 A1 (DAINIPPON INK & CHEMICALS) 07 April 2022 (2022-04-07) paragraphs [0001], [0002]-[0010], [0045]-[0054], [0057]-[0116] | 1-10 |
| Y | paragraphs [0001], [0002]-[0010], [0045]-[0054], [0057]-[0116] | 1-10 |
| X | JP 2012-208169 A (KONICA MINOLTA HOLDINGS INC) 25 October 2012 (2012-10-25) paragraphs [0001], [0002]-[0007], [0052]-[0056], [0060]-[0080], [0103], [0144]-[0212], [0265]-[0340] | 1-10 |
| Y | paragraphs [0001], [0002]-[0007], [0052]-[0056], [0060]-[0080], [0103], [0144]-[0212], [0265]-[0340] | 1-10 |
| X | JP 2001-328846 A (NITTO SHOJI KK) 27 November 2001 (2001-11-27) paragraphs [0001], [0002]-[0005], [0030]-[0064], fig. 1 | 1, 3, 6-10 |
| X | WO 2019/074121 A1 (IBIDEN CO LTD) 18 April 2019 (2019-04-18) claims 1-44, paragraphs [0001], [0002]-[0012], [0015]-[0104], [0128]-[0170], [0248]-[0326], fig. 1 | 1-10 |

☑ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 June 2023** | **04 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/015531**

| C. | DOCUMENTS CONSIDERED TO BE RELEVANT | |
|---|---|---|
| Category* | Citation of document, with indication, where appropriate, of the relevant passages | Relevant to claim No. |
| X | KR 10-2022-0020792 A (SOLUETA CO., LTD.) 21 February 2022 (2022-02-21) paragraphs [0001]-[0122], fig. 1-21 | 1-10 |

Form PCT/ISA/210 (second sheet) (January 2015)

INTERNATIONAL SEARCH REPORT
Information on patent family members

International application No.

**PCT/JP2023/015531**

| Patent document cited in search report | | | Publication date (day/month/year) | Patent family member(s) | | | Publication date (day/month/year) |
|---|---|---|---|---|---|---|---|
| WO | 2022/070934 | A1 | 07 April 2022 | TW | 202214787 | A | |
| JP | 2012-208169 | A | 25 October 2012 | (Family: none) | | | |
| JP | 2001-328846 | A | 27 November 2001 | (Family: none) | | | |
| WO | 2019/074121 | A1 | 18 April 2019 | US | 2020/0236946 | A1 | |
| | | | | claims 1-44, paragraphs [0001], [0002]-[0018], [0021]-[0107], [0208]-[0281], [0419]-[0579], fig. 1 | | | |
| | | | | EP | 3695724 | A1 | |
| | | | | CN | 111194168 | A | |
| KR | 10-2022-0020792 | A | 21 February 2022 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015098817 A